# EUROPÄISCHE PATENTANMELDUNG

(11) **EP 1 092 600 A2**
(43) Veröffentlichungstag der Anmeldung: **18.04.2001**
(21) Anmeldenummer: 00121300.8
(22) Anmeldetag: 06.10.2000
(51) Int. Cl.: B60R 21/20

(54) **Gassack-Modul mit Gehäuse**

(30) Priorität: 12.10.1999 DE 29917942 U
(71) Anmelder: TRW Occupant Restraint Systems GmbH & Co. KG, 73553 Alfdorf (DE)
(72) Erfinder: Acker, Dominique, 73553 Alfdorf (DE); Bonnet, Jochen, 73529 Schwäbisch Gmünd (DE); Dannenhauer, Reiner, 73642 Welzheim (DE); Hägele, Bernd, 73571 Göggingen (DE)
(74) Vertreter: Degwert, Hartmut, Dipl.-Phys.

(57) **Zusammenfassung**

Die Erfindung betrifft ein Gassack-Modul mit einem aus einem Plastikmaterial geformten Gehäuse (12) und einer Packung (36), die einen gefalteten Gassack (40) und einen Gasgenerator (38) enthält, wobei die Packung (36) im Gehäuse (12) aufgenommen ist. Das Gehäuse (12) weist einen im wesentlich flachen Boden (14) und einen kastenförmigen Behälter (16) mit einer offenen Seite auf, wobei der Behälter (16) einen Deckel (22) und vier Seitenwände (24), die einstückig mit dem Deckel (22) ausgebildet sind, hat, und der Behälter (16) einteilig mit dem Boden (14) ausgebildet ist. Der Behälter (16) ist mit dem Boden (14) entlang einer gemeinsamen, ein Scharnier (26) bildenden Kante zwischen dem Boden (14) und einer der Seitenwände (24) des Behälters (16) verbunden. Am Gasgenerator (38) sind abstehende Befestigungsbolzen (44) ausgebildet, und der Boden (14) weist entsprechende Öffnungen (42) zum Hindurchführen der Befestigungsbolzen (44) auf. Der Deckel (22) weist am Übergang zu einer Seitenwand (24) eine Sollbruchlinie (34) auf. Der Behälter (16) ist durch Klappen um das Scharnier (26) von einer offenen Stellung, in der die Packung (36) allseitig freiliegt, in eine geschlossene Stellung, in der die offene Seite des Behälters (16) vom Boden (14) verschlossen ist, bewegbar. Der Gassack öffnet bei dessen Entfaltung den Deckel (22) an der Sollbruchlinie (34).

## Beschreibung

Die Erfindung betrifft ein Gassack-Modul mit einem aus einem Plastikmaterial geformten Gehäuse und einer Packung, die einen gefalteten Gassack und einen Gasgenerator enthält, wobei die Packung im Gehäuse aufgenommen ist.

Bekannte Gehäuse von Gassack-Modulen bestehen aus einer Aufnahme für den Gasgenerator und den Gassack sowie einer Abdeckung zum Fahrzeuginnenraum. Die Abdeckung läßt sich zum Einbau und zur Entfaltung des Gassacks nur über einen geringen Winkelbereich öffnen, wodurch die Montage der Packung aus gefaltetem Gassack und Gasgenerator erschwert wird.

Die Erfindung sieht vor, daß das Gehäuse einen im wesentlich flachen Boden und einen kastenförmigen Behälter mit einer offenen Seite aufweist. Der Behälter hat einen Deckel und vier einstückig mit dem Deckel ausgebildete Seitenwände. Ferner ist der Behälter einteilig mit dem Boden ausgebildet und mit dem Boden entlang einer gemeinsamen, ein Scharnier bildenden Kante zwischen dem Boden und einer der Seitenwände des Behälters verbunden. Am Gasgenerator sind abstehende Befestigungsbolzen ausgebildet, und der Boden hat entsprechende Öffnungen zum Hindurchführen der Befestigungsbolzen. Der Deckel hat am Übergang zu einer Seitenwand eine Sollbruchlinie. Der Behälter ist durch Klappen um das Scharnier von einer offenen Stellung, in der die Packung nach allen Seiten freiliegt, in eine geschlossene Stellung, in der die offene Seite des Behälters vom Boden verschlossen ist, bewegbar, und der Gassack öffnet bei dessen Entfaltung den Deckel an der Sollbruchlinie.

Durch die einteilige Ausführung des Deckels mit dem Boden wird die Zahl der Einzelteile und der Montageschritte reduziert, was zu einer Kostenersparnis führt. Das Scharnier zwischen Boden und kastenförmigem Behälter ermöglicht ein weites Aufklappen des Gehäuses, so daß die Packung auf dem freiliegenden Boden ohne Behinderung durch den Behälter montiert werden kann. Nach Anbringen der Gassack/Generator-Packung kann der Behälter über den Boden geklappt werden, um das Gehäuse zu schließen.

Durch die vom Gasgenerator abstehenden Befestigungsbolzen, die bei der Montage durch die entsprechenden, im Boden ausgebildeten Öffnungen geführt werden, läßt sich der Gasgenerator zur Erzielung der größtmöglichen Festigkeit direkt am Fahrzeug befestigen, während mit dieser Verbindung gleichzeitig auch das Gehäuse ohne zusätzliches Montagematerial am Fahrzeug befestigt werden kann.

Nach der Aktivierung des Gassacks wird der Deckel an der Sollbruchlinie durch den Gassack geöffnet. Da die Sollbruchstelle in der Nähe einer Seitenwand positioniert ist, kann ein großer Teil des Deckels aufklappen, um eine große Öffnung für den Gassack freizugeben.

Vorteilhafterweise ist außerdem vorgesehen, daß der Boden und der kastenförmiger Behälter angeformte zusammenwirkende Rastelemente aufweisen, um den Behälter und den Boden in der geschlossenen Stellung miteinander zu verbinden. Diese Anordnung dient dazu, das Gehäuse nach der Montage der Generator/Gassack-Packung zu verschließen. Die angeformten Rastelemente ermöglichen eine einfache Verbindung der beiden Gehäuseteile ohne zusätzliches Montagematerial.

Der Boden weist vorteilhafterweise eine Bodenplatte, ein Seitenwandungsteil, das im wesentlichen senkrecht zu der Bodenplatte steht, und ein geneigtes Zwischenwandungsteil auf, das die Bodenplatte mit dem Seitenwandungsteil verbindet. Der Boden kann auf diese Weise optimal an eine einfache Montage der Gassack/Generator-Packung angepaßt werden.

In einer vorteilhaften Ausführungsform der Erfindung weist der Deckel Randbereiche auf, die über die Seitenwände hinausragen. Diese Randbereiche dienen zur Abdeckung des Spaltes zwischen dem Gehäuse und einer Aufnahme für die Generator/Gassack-Packung im Fahrzeug zur Verbesserung des optischen Eindrucks.

Die Randbereiche des Deckels fügen sich dabei bevorzugterweise in die Kontur eines Fahrzeugteils, z.B. eines Fahrzeugsitzes ein. Die Form der überstehenden Randbereiche kann ohne großen Aufwand an verschiedene Anforderungen angepaßt werden.

Weitere Merkmale und Vorteile der Erfindung ergeben sich aus der nachfolgenden Beschreibung bevorzugter Ausführungsbeispiele, mit Bezug auf die beigefügten Zeichnungen. In diesen zeigen:
Figur 1 einen Querschnitt durch ein erfindungsgemäßes Gassack-Modul mit einem Gehäuse im geöffneten Zustand und
Figur 2 einen Querschnitt durch ein erfindungsgemäßes Gassack-Modul mit einem Gehäuse im geschlossenen Zustand.

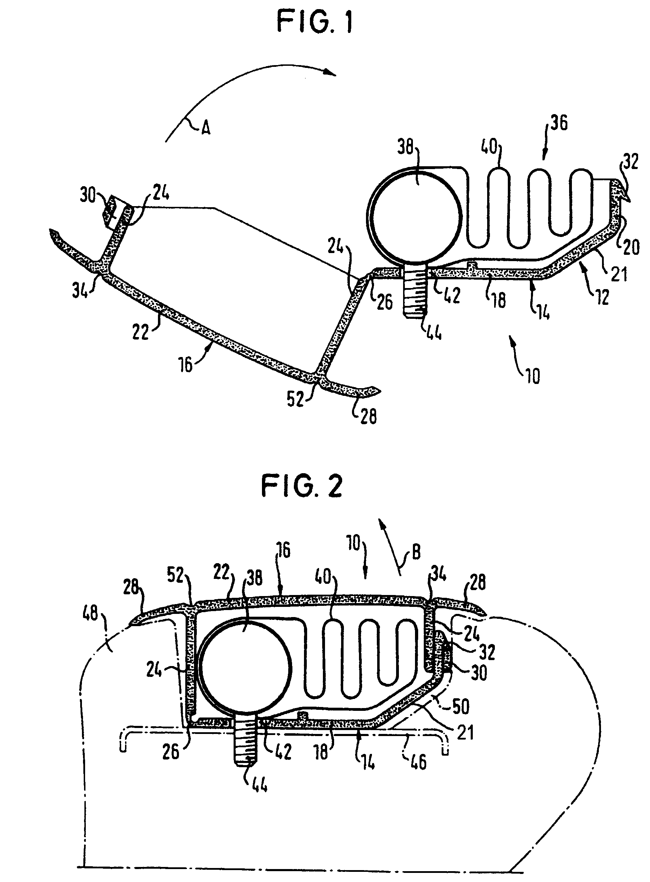

In Fig. 1 ist ein erfindungsgemäßes Gassack-Modul 10 mit einem einteiligen Gehäuse 12 gezeigt. Das Gehäuse 12 besteht im wesentlichen aus einem Boden 14 und einem kastenförmigen Behälter 16. Der Boden 14 enthalt eine Bodenplatte 18, ein im wesentlichen dazu senkrecht stehendes Seitenwandungsteil 20 sowie ein Boden 14 und Seitenwandungsteil 20 verbindendes Zwischenwandungsteil 21, das sich schräg zur Bodenplatte 18 erstreckt. Die Bodenplatte 18, das Seitenwandungsteil 20 und das Zwischenwandungsteil 21 sind einstückig ausgebildet.

Der Behälter 16 besteht aus einem Deckel 22 und Seitenwänden 24. Die Seitenwände 24 sind am Deckel 22 angeformt. Ein aus einem biegsamen Materialstreifen gebildetes Scharnier 26 verbindet die Bodenplatte 18 mit einer Seitenwand 24 des Behälters 16.

Der Deckel 22 weist außerdem Randbereiche 28 auf, die über die Seitenwände 24 hinausragen.

Am Deckel 22 und an der Seitenwandungsplatte 20 sind jeweils Rastelemente 30 und 32 angeformt, die zur Befestigung des Behälters 16 am Boden 14 zur Bildung eines geschlossenen Gehäuses ineinandergreifen können.

In den Deckel 22 ist in unmittelbarer Nähe zu einer Seitenwand 24 außerdem eine Sollbruchlinie 34 eingearbeitet.

Auf der Bodenplatte 18 ist eine Generator/Gassack-Packung 36 mit einem Gasgenerator 38 und einem gefalteten Gassack 40 angebracht. Die Bodenplatte 18 weist Öffnungen 42 für vom Gasgenerator 38 abstehende Befestigungsbolzen 44 auf, mit denen die Generator/Gassack-Packung 36 und die Bodenplatte 18 an einem geeigneten Teil 46 des Fahrzeuges befestigt werden können (Fig. 2).

Fig. 1 zeigt das Gehäuse 12 in einem aufgeklappten Zustand. Der Deckel 22 ist so weit von der Bodenplatte 18 entfernt, daß die Generator/Gassack-Packung 36 einfach mit den Befestigungsbolzen 44, die durch die Öffnungen 42 geführt werden, am Fahrzeugteil 46 befestigt werden können. Nachdem die Generator/Gassack-Packung 36 montiert ist, wird das Gehäuse 12 in Pfeilrichtung A zugeklappt, wobei die Rastelemente 30 und 32 ineinander eingreifen und eine feste Verbindung bilden. Die Seitenwände 24 des Behälters 16 greifen im geschlossenen Zustand (Fig. 2) in die Seitenwandungsteile 20 der Bodenplatte 18, so daß das Gehäuse 12 nach allen Seiten abgeschlossen und die Generator/Gassack-Packung 36 vor Verschmutzung und Beschädigung geschützt ist.

Die Randbereiche 28 des Deckels 22 des Gehäuses 12 fügen sich im geschlossenen Zustand des Gehäuses in die Kontur des Fahrzeugteiles 48, hier eines Fahrzeugsitzes, ein, in dem das Gassack-Modul 10 untergebracht ist. Die überstehenden Randbereich 28 überdecken die Lücke zwischen den Seitenwandungen 20, 24 des Gehäuses 12 und der im Fahrzeugsitz 48 für das Gassack- Modul 36 vorgesehenen Aufnahme 50.

Wird der Gassack 40 durch einen (nicht gezeigten) Sensor aktiviert, strömt Druckgas vom Gasgenerator 38 in den Gassack 40. Der sich ausdehnende Gassack 40 drückt von innen gegen den Deckel 22, der sich bei einem vorbestimmten Gassackinnendruck an der Sollbruchlinie 34 öffnet. Daraufhin wird der Deckel 22 auf bekannte Weise vom Gassack in Pfeilrichtung B aufgedrückt und der Gassack 40 entfaltet sich durch die entstehende Öffnung.

Die Kraft zur Öffnung der Sollbruchlinie 34 ist geringer gewählt als die Festigkeit der Rastverbindung 30, 32, so daß gewährleistet ist, daß sich das Gehäuse an der Sollbruchlinie 34 öffnet.

Das Gehäuse 12 besteht vorzugsweise aus einem geeigneten Kunststoff, der die nötige Freiheit in der Formgebung zuläßt sowie die notwendige Flexibilität für die Funktion der Scharniere 18, 52 aufweist.

## Patentansprüche

1. Gassack-Modul mit einem aus einem Plastikmaterial geformten Gehäuse (12) und einer Packung (36), die einen gefalteten Gassack (40) und einen Gasgenerator (38) enthält, wobei die Packung (36) im Gehäuse (12) aufgenommen ist, dadurch gekennzeichnet, daß das Gehäuse (12) einen im wesentlich flachen Boden (14) und einen kastenförmigen Behälter (16) mit einer offenen Seite aufweist, wobei der Behälter (16) einen Deckel (22) und vier einstückig mit dem Deckel (22) ausgebildete Seitenwände (24) aufweist, und der Behälter (16) einteilig mit dem Boden (14) ausgebildet und mit dem Boden (14) entlang einer gemeinsamen, ein Scharnier (26) bildenden Kante zwischen dem Boden (14) und einer der Seitenwände (24) des Behälters (16) verbunden ist, daß am Gasgenerator (38) abstehende Befestigungsbolzen (44) ausgebildet sind und der Boden (14) entsprechende Öffnungen (42) zum Hindurchführen der Befestigungsbolzen (44) aufweist, daß der Deckel (22) am Übergang zu einer Seitenwand (24) eine Sollbruchlinie (34) aufweist, daß der Behälter (16) durch Klappen um das Scharnier (26) von einer offenen Stellung, in der die Packung (36) allseitig freiliegt, in eine geschlossene Stellung, in der die offene Seite des Behälters (16) vom Boden (14) verschlossen ist, bewegbar ist und daß der Gassack bei dessen Entfaltung den Deckel (22) an der Sollbruchlinie (34) öffnet.

2. Gassack-Modul nach Anspruch 1, dadurch gekennzeichnet, daß der Boden (14) und der kastenförmige Behälter (16) angeformte zusammenwirkende Rastelemente (30, 32) aufweisen, um den Behälter (16) und den Boden (14) in der geschlossenen Stellung miteinander zu verbinden.

3. Gassack-Modul nach Anspruch 1 oder 2, dadurch gekennzeichnet, daß der Boden (14) eine Bodenplatte (18), ein Seitenwandungsteil (20), das im wesentlichen senkrecht zu der Bodenplatte (18) steht, und ein geneigtes Zwischenwandungsteil (21) aufweist, das die Bodenplatte (18) mit dem Seitenwandungsteil (20) verbindet.

4. Gassack-Modul nach Anspruch 3, dadurch gekennzeichnet, daß der Deckel (22) Randbereiche (28) aufweist, die über die Seitenwände (24) hinausragen.

5. Gassack-Modul nach Anspruch 4, dadurch gekennzeichnet, daß der Deckel (22) mit den Randbereichen (28) in eine Kontur eines Fahrzeugteils (48) einfügbar ist.
